# EUROPEAN PATENT APPLICATION

(11) **EP 1 154 540 A1**
(43) Date of publication of application: **14.11.2001**
(21) Application number: 99959944.2
(22) Date of filing: 21.12.1999
(51) Int. Cl.: H02J 7/02, A63H 11/00, A63H 29/22, B25J 13/00

(54) **ROBOT-CHARGING SYSTEM, ROBOT, BATTERY CHARGER, METHOD OF CHARGING ROBOT, AND RECORDING MEDIUM**

(30) Priority: 21.12.1998 JP 36229998; 10.05.1999 JP 12927999
(71) Applicant: Sony Corporation, Tokyo 141-0001 (JP)
(72) Inventor: KAWAKITA, Kozo, Sony Corporation, Shinagawa-ku, Tokyo 141-0001 (JP)
(74) Representative: Pilch, Adam John Michael
(86) International application number: JP9907179
(87) International publication number: WO0038295

(57) **Abstract**

On charging a charging battery mounted on a robot apparatus, the robot apparatus is caused to perform a predetermined movement in accordance with an amount of charging of the charging battery, and thereby it is possible to recognize a state of charging of the charging battery on the basis of the movement of the robot apparatus, and the entertainment characteristics can be improved.

## Description

### Technical Field

The present invention relates to a robot apparatus charging system, a robot apparatus, a charging device, a charging method for the robot apparatus, and a recording medium, and more particularly to, for example, a walking robot.

### Background Art

Conventionally, there is equipment including a charging battery and a charging device for charging a charging battery itself. The conventional charging device has generally notified of commencement of charging and completion of charging of these charging batteries by lighting an LED (Light Emitting Diode).

In a system for notifying completion of charging or the like by lighting an LED, however, it is deficient in attention-arousing capability and it is difficult for the user to become aware of the charging-completed state, and therefore, there is a problem in that unnecessary charging will be continued for many hours while not being aware of the state, resulting in noticeable power consumption wasted.

In recent years, a multiplicity of entertainment robots which are driven with a charging battery as a power source have been put into commercial production. However, in those entertainment robots having the configuration in which any movement or performance is not made while the charging battery is being charged, there has had a problem in that they bore the users during charging, deteriorating the entertainment characteristics.

### Disclosure of the Invention

The present invention has been achieved in consideration of the above described points, and is aimed to propose a robot apparatus charging system, a robot apparatus, a charging device, a charging method for a robot apparatus, and a recording medium, capable of obviously notifying of a charging state and on the other hand, improving the entertainment characteristics by reducing the boredom during charging.

In order to solve such problems, in the robot apparatus charging system, the robot apparatus has been caused, according to the present invention, to perform a predetermined movement in accordance with an amount of charging in the charging battery when the charging battery in the robot apparatus is charged. AS a result, in this robot apparatus charging system, the user is capable of recognizing a charging state of the charging battery based on the movement of the robot apparatus, and high attention-arousing capability to the charging of the charging battery can be exhibited. At the same time, the boredom of the robot apparatus during charging can be reduced so that high entertainment characteristics is obtained.

Also, according to the present invention, the robot apparatus has been caused to perform a predetermined movement in accordance with an amount of charging in the charging battery when the charging battery mounted thereon is charged. AS a result, in this robot apparatus, the user is capable of recognizing a charging state of the charging battery based on the movement of the robot apparatus, and high attention-arousing capability to the charging of the charging battery can be exhibited. At the same time, the boredom of the robot apparatus during charging can be reduced so that high entertainment characteristics is obtained.

Further, according to the present invention, in a charging device for charging a charging battery mounted on the robot apparatus, the robot apparatus has been caused to perform a predetermined movement in accordance with an amount of charging in the charging battery when charging the charging battery. AS a result, according to this charging device, the user is capable of recognizing a charging state of the charging battery based on the movement of the robot apparatus, and high attention-arousing capability to the charging of the charging battery can be exhibited. At the same time, the boredom of the robot apparatus during charging can be reduced so that high entertainment characteristics is obtained.

Further, according to the present invention, in a charging method for charging a charging battery mounted on the robot apparatus, the robot apparatus has been caused to perform a predetermined movement in accordance with an amount of charging in the charging battery when charging the charging battery. AS a result, according to this charging method for the robot apparatus, the user is capable of recognizing a charging state of the charging battery based on the movement of the robot apparatus, and high attention-arousing capability to the charging of the charging battery can be exhibited. At the same time, the boredom of the robot apparatus during charging can be reduced so that high entertainment characteristics is obtained.

Further, according to the present invention, a control program for executing the above described charging method for the robot apparatus has been caused to be recorded in a recording medium. As a result, according to the control program recorded in this recording medium, the user is capable of recognizing a charging state of the charging battery based on the movement of the robot apparatus, and high attention-arousing capability to the charging of the charging battery can be exhibited. At the same time, the boredom of the robot apparatus during charging can be reduced so that high entertainment characteristics is obtained.

Further, according to the present invention, the robot apparatus is provided with movement generating means for generating a movement, detection means for detecting that a predetermined area has been rocked, and control means for controlling the movement generating means in such a manner that when it is recognized that the predetermined area has been rocked based on detection result of the detection means in a state in which generation of any movement has been stopped, the control means controls the movement generating means to start generation of a movement. As a result, this robot apparatus is capable of giving the user an impression of a living thing, and giving the same feeling of intimacy or affection as that to a pet such as dogs and cats, thus making it possible to obtain high entertainment characteristics.

### Brief Description of the Invention

Figure 1 is a perspective view showing configuration of a walking robot according to this Embodiment;
Figure 2 is a perspective view for explaining a charging system for the walking robot shown in Figure 1;
Figure 3 is a perspective view showing configuration of the charging stand;
Figure 4 is a bottom view showing a shape of the abdominal surface of the walking robot shown in Figure 1; and
Figure 5 is a block diagram showing a circuit configuration for the charging system shown in Figure 2.

### Best Mode for Carrying Out the Invention

Hereinafter, with reference to the drawings, the detailed description will be made of an embodiment according to the present invention.

### (1) Configuration of Walking Robot according to this Embodiment

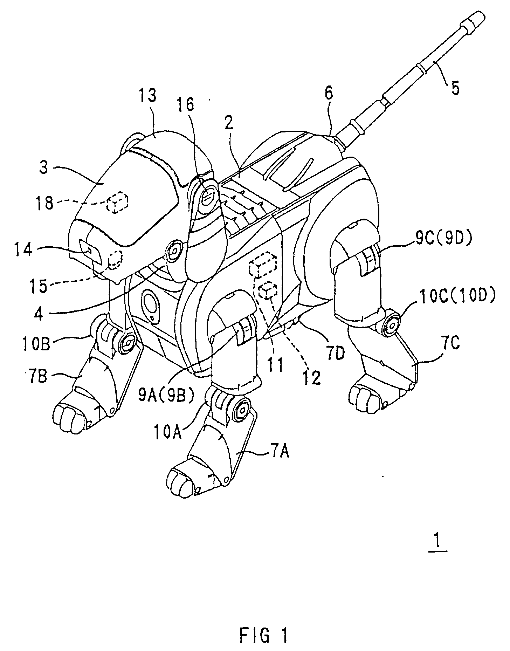

Figure 1 shows a small-sized walking robot 1 modeled after a four-footed animal such as a dog and a cat. The walking robot 1 is configured such that a head 3 is mounted on the front end of a trunk 2 via a head joint 4 in such a manner as to be freely rotatable in two directions: up, down, left or right, a tail 5 is mounted on the rear portion of the trunk 2 via a tail joint 6 in such a manner as to be freely rotatable in two directions: up, down, left or right, and two forelegs 7A and 7B and two hind legs 7C and 7D are mounted on the trunk 2 each at two places before and after it on the lateral sides thereof via shoulder joints 9A to 9D and knee joints 10A to 10D respectively in such a manner as to be freely rotatable in two directions: up, down, left or right.

Within the trunk 2, there are incorporated a main controller 11 consisting of microcomputers for concentratedly controlling a controller to be described later, a telephone unit (not shown), an acceleration sensor 12 for detecting acceleration in three axes (X-axis, Y-axis and Z-axis) directions of the walking robot, or the like. Also, on the head 3, there are disposed a touch sensor 13, a CCD (Charge Coupled Device) camera 14, a speaker 15, a microphone 17, an infrared controller 18 or the like.

The main controller 11 drives four legs in total consisting of forelegs 7A and 7B and hind legs 7C and 7D to fold or extend these forelegs 7A and 7B and hind legs 7C and 7D, whereby this walking robot 1 is capable of lying down and standing up under its own power. By causing these forelegs 7A and 7B and hind legs 7C and 7D to perform a walking movement, the walking robot 1 is capable of walking under its own power.

Further, the walking robot 1 is configured such that when the main controller 11 drives the head 3 and the tail 5, the walking robot 1 is capable of shaking the head 3 and wagging the tail 5 up, down, left, or right to express movements similar to four-footed animals such as dogs and cats.

Similarly, when the user touches the touch sensor 13 on the head 3, the walking robot is capable of expressing movements of pleasure by shaking the head 3 or wagging the tail 5, and raising one of the forelegs 7A and 7B in response to "Give me a paw."

Also, this walking robot 1 is capable of recognizing, for example, any obstacle in walking through the main controller 11 on the basis of output from the CCD camera 14, thereby avoiding the obstacle for safely walking to the destination, and transmitting the user's face inputted through the CCD camera 14 to a person on the other end of the line during telephone communication under the control of the main controller 11.

Further, the walking robot 1 is capable of outputting a cry of an animal such as a dog and a cat such as "bow-wow" and "mew" via the speaker 15, and controlling various infrared control equipment such as television sets and video tape recorders by the infrared controller 18.

### (2) Configuration of Charging System for Walking Robot 1

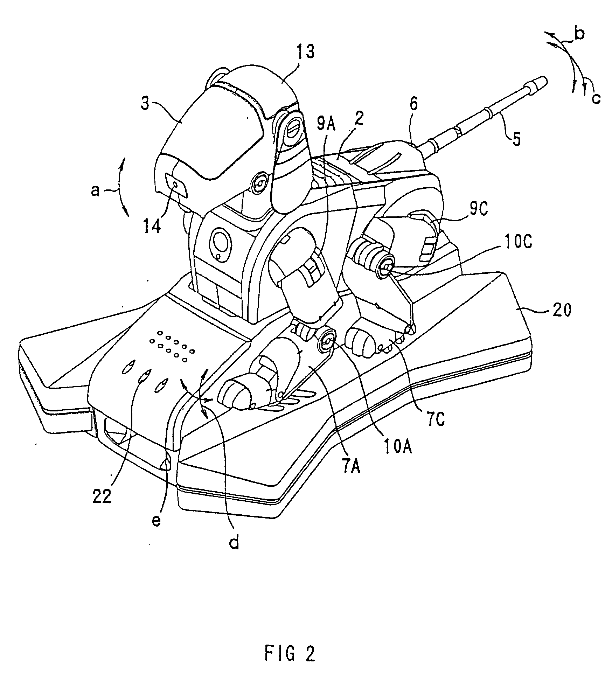

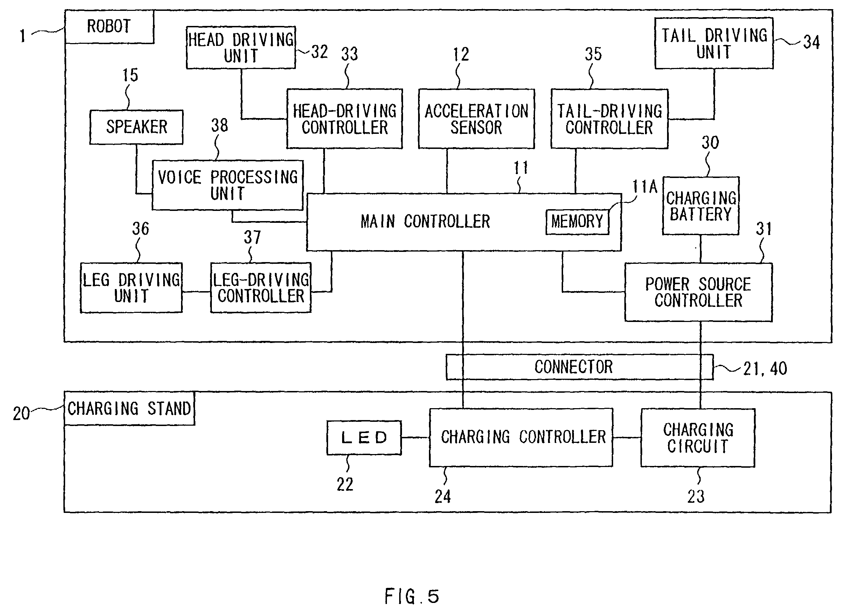

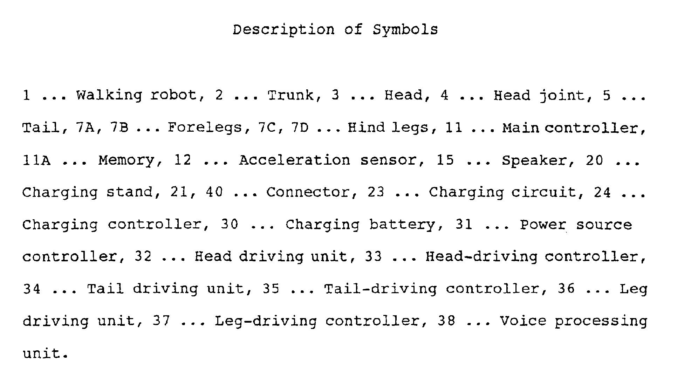

Next, with reference to Figures 2 to 5, the description will be made of configuration of the charging system consisting of a charging stand 20 for charging a charging battery 30 (Figure 5) to be described later, mounted on the walking robot 1, and a portion relating to charging to the walking robot 1.

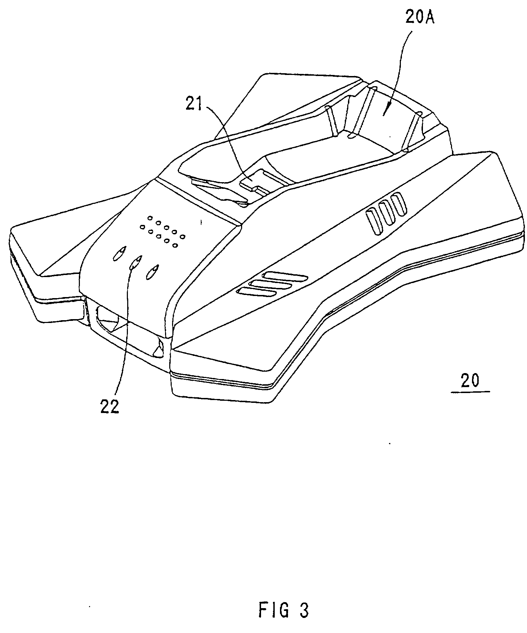

The charging stand 20 is, in its upper, central portion as shown in Figure 3, provided with a concave portion 20A having the substantially same shape and dimensions as the underside of the trunk 2 of the walking robot 1, and a connector for power-supplying (so-called terminal) 21 is disposed at a predetermined position within the concave portion 20A.

At the front end of the charging stand 20, there are provided LEDs (hereinafter, referred to as charging state indicating LEDs) 22 for notifying of "during charging" and "completion of charging" in color as described later, and within the charging stand 20, there are housed a charging circuit 23 (Figure 5), a charging controller 24 (Figure 5) or the like as shown in Figure 5.

On the other hand, within the trunk 2 of the walking robot 1, there are, as shown in Figure 5, mounted a head driving unit 32 as driving means for the head joint 4 (Figure 1), and a head-driving controller 34 as its control means; a tail driving unit 34 as driving means for the tail joint 6 (Figure 1) and a tail-driving controller 35 as its control means; shoulder joints 9A to 9D (Figure 1) in the forelegs 7a and 7B and the hind legs 7C and 7D, a leg driving unit 36 as driving means for the knee joints 10A to 10D (Figure 1) and a leg-driving controller 37 as its control means; and a voice processing unit 38 for generating voice signals for various voices such as a cry under the control of the main controller 11 to transmit to the speaker 15, including a charging battery 30 and a power source controller 31.

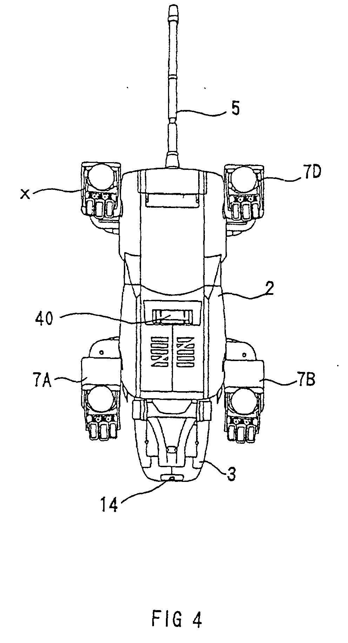

In the abdomen of the trunk 2 of the walking robot 1, a connector 40 is provided at a predetermined position correspondingly to the connector 21 (Figure 3) of the charging stand 20 as shown in Figure 4, and the trunk 2 of the walking robot 1 is placed so as to be fitted into the concave portion 20A on the charging stand 20 as shown in Figure 2, whereby the walking robot 1 and the charging stand 20 are adapted to be able to be electrically connected via the connector 40 of the walking robot 1 and the connector 21 of the charging stand 20 as shown in Figure 5.

When the walking robot 1 is placed on the charging stand 20 as described above, the main controller 11 in the walking robot 1 controls the head-driving controller 33, the tail-driving controller 35 and the leg-driving controller 37 respectively on the basis of the control program stored in advance in a memory 11A disposed within to drive the head driving unit 32, the tail driving unit 34 and the leg driving unit 36 as required, whereby the walking robot 1 is caused to take a pose during charging, expressing weakness in which it hangs its head 3, hangs down the tail 5, and hangs down the forelegs 7A and 7B and the hind legs 7C and 7D.

Also, at this time, in the charging stand 20, a charging circuit 23 starts supplying of power to the charging battery 30 in the walking robot 1 through the power source controller 24 of the walking robot 1, that is, starts charging, and the charging controller 24 lights a charging state indicating LED 22 in orange color to indicate that charging has been started.

When charging to the charging battery 30 in the walking robot 1 is completed after a lapse of a predetermined time, a charging-completed signal is outputted from the power source controller 31, which has monitored a charging state (amount of charging) of the charging battery 30 until then, to the main controller 11, and the charging-completed signal is outputted from the main controller 11 to the charging controller 24 in the charging stand 20. As a result, the luminescent color of the charging state indicating LED22 changes into green color under the control of the charging controller 24.

At this time, the main controller 11 in the walking robot 1 controls the head-driving controller 33, the tail-driving controller 35, the leg-driving controller 37 and/or the voice processing unit 38 on the basis of the control program stored in the memory 11A, whereby the walking robot 1 is caused to take a pose to notify of completion of charging.

As a pose to notify of such completion of charging, there will be practically executed such a head-raising movement as to lift the head 3 upward when the head-driving controller 33 drives the head driving unit 32 or such a pose as to shake the head 3 up and down (directions indicated by an arrow a in Figure 2); such a pose as to wag the tail 5 up and down (directions indicated by an arrow b in Figure 2) or left and right (directions indicated by an arrow c in Figure 2) when the tail-driving controller 35 drives the tail driving unit 34; such a pose as to lift the forelegs 7A and 7B upward (direction indicated by an arrow d in Figure 2) for shaking them up and down, and shaking them left and right (directions indicated by an arrow e in Figure 2), or to extend the entire forelegs 7A and 7B and hind legs 7C and 7D for raising the trunk 2 when the leg-driving controller 37 drives the leg driving unit 36; such a pose as to output, when the voice processing unit 38 generates a voice signal to output to the speaker 15, an animal's cry such as "bow-wow" and "mew" based on the voice signal through the speaker 15, or the like.

In this respect, at this juncture, it may be possible not only to terminate a pose to notify of the completion of charging only by one pose, but also to continuously execute a plurality of types of poses for continuous movements. When there is taken the pose to extend the entire forelegs 7A and 7B and hind legs 7C and 7D for raising the trunk 2, it may be possible to raise the trunk 2 above the charging stand 20 for retracting from the connector 21 (Figure 3) of the charging stand 20 under its own power, and to subsequently cause the forelegs 7A and 7B and the hind legs 7C and 7D to perform a walking movement for retracting from the charging stand 20 under its own power.

Also, after such a pose to notify of the completion of charging as described above is caused to be performed for a predetermined time, the main controller 11 in the walking robot 1 controls the head-driving controller 33, the tail-driving controller 35, the leg-driving controller 37 and/or the voice processing unit 38 as required to thereby stop the movement of the walking robot 1.

Further, when it subsequently recognizes that the trunk 2 has been rocked on the basis of output from the acceleration sensor 12, the main controller 11 starts controlling the head-driving controller 33, the tail-driving controller 35, the leg-driving controller 37 and/or the voice processing unit 38 on the basis of the control program stored in the memory 11A to thereby perform such a movement as to lift the head 3 upward by driving the head driving unit 32, a movement to wag the tail 5 up, down, left or right by driving the tail driving unit 34, such a movement as to shake the forelegs 7A and 7B up and down by raising them upward, such a movement as to generate an animal's cry through the speaker 15 and other movements.

In this manner, the walking robot 1 starts the movement as if it awaked from its sleep when the trunk 2 is rocked after its movement is stopped.

### (3) Movement and Effect of this Embodiment

In the above described configuration, the walking robot 1 takes the pose during charging, expressing weakness in which it hangs its head 3, hangs down the tail 5, and hangs down the forelegs 7A and 7B and the hind legs 7C and 7D during charging. Thereafter, after the completion of charging, the walking robot 1 takes the pose of completion of charging in which it moves the head 3, the tail 5, the forelegs 7A and 7B and/or the hind legs 7C and 7D, and generates an animal's cry.

The walking robot 1 automatically takes the pose to notify of completion of charging in this manner at the completion of charging, whereby the user is capable of obviously recognizing the completion of charging based on changes in posture and movements thereof.

In other words, the walking robot 1 is capable of strongly appealing to the user that the charging has been completed by changes in the posture and movements of its own at the completion of charging, and exhibiting high attention-arousing capability. Also, by doing so, the entertainment characteristics can be also improved.

When the walking robot 1 stops its movement after a lapse of a predetermined time after completion of charging and then the trunk 2 is rocked by the user or the like, the rocking is detected by the acceleration sensor 12, and the walking robot 1 starts the movement as if it awaked from its sleep. Therefore, this walking robot 1 is capable of giving the user an impression of a living thing, and giving the same feeling of intimacy or affection as that to a pet.

According to the above described configuration, the walking robot 1 is caused to take the charging-completed pose in which the head 3, the tail 5, the forelegs 7A and 7B and/or the hind legs 7C and 7D are moved, and an animal's cry is generated at the completion of charging, whereby it is possible to cause the user to obviously recognize the completion of charging based on changes in posture and movements of the walking robot 1.

Since it is caused to start the movement when the trunk 2 is rocked in a state in which the movement is stopped, the walking robot 1 is capable of being caused to have an impression of a living thing. Thus, the same feeling of intimacy or affection as that to a pet can be given to the user, obtaining high entertainment characteristics.

### (4) Other Embodiments

In this respect, in the above described embodiment, the description has been made of the case where the present invention is applied to a four-footed walking type walking robot 1 configured as shown in Figure 1, but the present invention is not limited thereto, but can be widely applied to a mobile type robot using wheels and other various robot apparatuses.

Also, in the above described embodiment, the description has been made of the case where the walking robot 1 is caused to simply stop its movement after a lapse of a predetermined time after completion of charging, but the present invention is not limited thereto, but it may be possible to stop the movement in a state in which it takes such a pose that it looks as if an animal such as a dog and a cat slept.

Further, in the above described embodiments, as a pose for expressing the completion of charging, the description has been made of the case in which there are taken such a movement as to lift the head 3 upward or such a pose as to shake the head 3 up and down; such a pose as to wag the tail 5 up, down, left or right; such a pose as to lift the forelegs 7A and 7B upward to shake them up and down, and shake left and right, or to extend the entire forelegs 7A and 7B and hind legs 7C and 7D for raising the trunk 2; such a pose as to generate an animal's cry such as "bow-wow" and "mew," or the like. However, the present invention is not limited thereto, but it may be possible to cause the walking robot 1 to take any other poses than those poses as the pose for expressing the completion of charging. As the pose for expressing the completion of charging, other various poses can be widely applied, so long as it is such a pose as to cause the user to obviously recognize the completion of charging.

Further, in the above described embodiments, the description has been made of the case where the walking robot 1 is caused to take a weak pose while the charging batter 30 is being charged, and at the completion of the charging to the charging battery 30, it is caused to take a pose for notifying of it. However, the present invention is not limited thereto, but it may be possible to gradually change an operating state (speed of movement, amount of movement, loudness of the cry, contents of the cry, and so forth) of the walking robot 1 in such a manner that it is gradually energized as the amount of charging is increased, in accordance with, for example, an amount of charging in the charging battery 30.

Further, in the above described embodiments, the description has been made of the case where the control program for controlling the movement of the walking robot 1 is stored in advance in the memory 11A within the main controller 11, but the present invention is not limited thereto, but various recording media can be widely applied in addition to the memory.

Further, in the above described embodiments, the description has been made of the case where the main controller 11 controls the head-driving controller 33, the tail-driving controller 35, the leg-driving controller 37 and the voice processing unit 38 in such a manner that the walking robot 1 takes the charging-completed pose (movement) on the basis of a charging-completed signal from the power source controller 31 after completion of charging to the charging battery 30. However, the present invention is not limited thereto, but the charging controller 24 of the charging stand 20 transmits a charging-completed signal to the main controller 11 of the walking robot 1 on the basis of the charging-completed signal from the power source controller 31 after completion of charging to the charging battery 30, and on the basis of the charging-completed signal, the main controller 11 may control the head-driving controller 33, the tail-driving controller 35, the leg-driving controller 37 and the voice processing unit 38 in such a manner that the walking robot 1 takes the charging-completion pose.

Further, in the above described embodiments, the description has been made of the case where the walking robot 1 starts the movement when the trunk 2 is rocked in a state in which the walking robot 1 has stopped the movement. However, the present invention is not limited thereto, but for example, the head 3 and the forelegs 7A and 7B other than the trunk 2 may be provided with acceleration sensors in such a manner that it starts the movement as if it awaked from its sleep when these head 3 and forelegs 7A and 7B are rocked.

Further, in the above described embodiments, the description has been made of the case where a cry such as "bow-wow" and "mew" is outputted through the speaker 15 as the charging-completed pose. However, the present invention is not limited thereto, but a buzzer sound or any other simple sound may be outputted.

### Industrial Applicability

The present invention is capable of being applied to various robots and their charging devices including entertainment robots.

## Claims

1. A robot apparatus charging system, comprising:
a robot apparatus on which a charging battery is mounted, and
a charging device for charging said charging battery mounted on said robot apparatus,
**characterized in that** said robot apparatus performs a predetermined movement in accordance with an amount of charging in said charging battery on charging said charging battery using said charging device.

2. The robot apparatus charging system according to claim 1,
**characterized in that** said robot apparatus has a movable portion and said predetermined movement is a movement to move said movable portion.

3. The robot apparatus charging system according to claim 2,
**characterized in that** said predetermined movement is a movement to change a pose of said robot apparatus from a first pose during charging to a second pose to notify of completion of charging by moving said movable portion at completion of charging of said charging battery.

4. The robot apparatus charging system according to claim 1,
**characterized in that** said predetermined movement is a movement to notify of completion of charging of said charging battery.

5. The robot apparatus charging system according to claim 4,
**characterized in that** said predetermined movement is a continuous movement.

6. The robot apparatus charging system according to claim 4,
**characterized in that** said robot apparatus has a head, and said predetermined movement is a movement to raise said head.

7. The robot apparatus charging system according to claim 4,
**characterized in that** said robot apparatus has forelegs and hind legs, and said predetermined movement is a movement to lift said forelegs.

8. The robot apparatus charging system according to claim 4,
**characterized in that** said robot apparatus has a tail, and said predetermined movement is a movement to wag said tail.

9. The robot apparatus charging system according to claim 4,
**characterized in that** said robot apparatus has legs, and said predetermined movement is a movement to raise said legs.

10. The robot apparatus charging system according to claim 4,
**characterized in that** said robot apparatus has a speaker, and said predetermined movement is a movement to make a sound through said speaker.

11. The robot apparatus charging system according to claim 4,
**characterized in that** said robot apparatus has voice generating means for generating a predetermined voice and a speaker, and said predetermined movement is a movement to output said voice generated by said voice generating means through said speaker.

12. A robot apparatus **characterized by** performing, on charging a charging battery mounted thereon, a predetermined movement in accordance with an amount of charging of said charging battery.

13. The robot apparatus according to claim 12, **characterized in that** said robot apparatus has a movable portion and said predetermined movement is a movement to move said movable portion.

14. The robot apparatus according to claim 13, **characterized in that** said predetermined movement is a movement to change a pose of said robot apparatus from a first pose during charging to a second pose to notify of completion of charging by moving said movable portion at completion of charging of said charging battery.

15. The robot apparatus according to claim 12, **characterized in that** said predetermined movement is a movement to notify of completion of charging of said charging battery.

16. The robot apparatus according to claim 15, **characterized in that** said predetermined movement is a continuous movement.

17. The robot apparatus according to claim 15, **characterized in that** said robot apparatus has a head, and said predetermined movement is a movement to raise said head.

18. The robot apparatus according to claim 15, **characterized in that** said robot apparatus has forelegs and hind legs, and said predetermined movement is a movement to lift said forelegs.

19. The robot apparatus according to claim 15, **characterized in that** said robot apparatus has a tail, and said predetermined movement is a movement to wag said tail.

20. The robot apparatus according to claim 15, **characterized in that** said robot apparatus has legs, and said predetermined movement is a movement to raise said legs.

21. The robot apparatus according to claim 15, **characterized in that** said robot apparatus has a speaker, and said predetermined movement is a movement to make a sound through said speaker.

22. The robot apparatus according to claim 15, **characterized in that** said robot apparatus has voice generating means for generating a predetermined voice and a speaker, and said predetermined movement is a movement to output said voice generated by said voice generating means through said speaker.

23. A charging device for charging a charging battery mounted on a robot apparatus, **characterized by** causing said robot apparatus, on charging said charging battery, to perform a predetermined movement in accordance with an amount of charging of said charging battery.

24. The charging device according to claim 23, **characterized in that** said robot apparatus is caused to perform said predetermined movement at completion of charging of said charging battery.

25. The charging device according to claim 23, **characterized in that** said predetermined movement is a movement to notify of completion of charging of said charging battery.

26. A robot apparatus charging method for charging a charging battery mounted on a robot apparatus, **characterized by** causing said robot apparatus, on charging said charging battery, to perform a predetermined movement in accordance with an amount of charging of said charging battery.

27. The robot apparatus charging method according to claim 26,
**characterized in that** said robot apparatus is caused to perform a predetermined movement at completion of charging of said charging battery.

28. The robot apparatus charging method according to claim 26,
**characterized in that** said predetermined movement is a movement to notify of completion of charging of said charging battery.

29. The robot apparatus charging method according to claim 28,
**characterized in that** said robot apparatus has a head, and said predetermined movement is a movement to raise said head.

30. The robot apparatus charging method according to claim 28,
**characterized in that** said robot apparatus has forelegs and hind legs, and said predetermined movement is a movement to lift said forelegs.

31. The robot apparatus charging method according to claim 28,
**characterized in that** said robot apparatus has a tail, and said predetermined movement is a movement to wag said tail.

32. The robot apparatus charging method according to claim 28,
**characterized in that** said robot apparatus has legs, and said predetermined movement is a movement to raise said legs.

33. The robot apparatus charging method according to claim 28,
**characterized in that** said robot apparatus has a speaker, and said predetermined movement is a movement to make a sound through said speaker.

34. The robot apparatus charging method according to claim 28,
**characterized in that** said robot apparatus has voice generating means for generating a predetermined voice and a speaker, and said predetermined movement is a movement to output said voice generated by said voice generating means through said speaker.

35. A recording medium in which at least one of robot apparatus charging methods specified in claims 26 to 34 is recorded.

36. A robot apparatus, comprising:
movement generating means for generating a movement;
detection means for detecting that a predetermined area is rocked; and
control means for controlling said movement generating means,
**characterized in that** when it is recognized that said predetermined area is rocked on the basis of detection result of said detection means in a state in which generation of said movement is stopped, said control means controls said movement generating means to start generation of said movement.
